# EUROPÄISCHE PATENTSCHRIFT

(11) **EP 0 294 001 B1**
(45) Veröffentlichungstag und Bekanntmachung des Hinweises auf die Patenterteilung: **31.08.1994**
(21) Anmeldenummer: 88201114.1
(22) Anmeldetag: 02.06.1988
(51) Int. Cl.: C25D 21/12, C25C 7/06, G01N 27/416

(54) **Verfahren zur Messung der wirksamen Inhibitorkonzentration während der Metallabscheidung aus wässrigen Elektrolyten**
Process for measuring the effective inhibitor concentration during metal deposition from aqueous electrolytes
Procédé pour la mesure de la concentration d'inhibiteur efficace pendant le dépôt métallique à partir d'électrolytes aqueux

(30) Priorität: 03.06.1987 DE 3718584
(43) Veröffentlichungstag der Anmeldung: 07.12.1988
(73) Patentinhaber: NORDDEUTSCHE AFFINERIE AG, D-20033 Hamburg (DE)
(72) Erfinder: Langner, Bernd, Dr., D-2090 Winsen/Luhe (DE); Stantke, Peter, D-2150 Buxtehude (DE); Reinking, Ernst-Friedrich, D-2111 Underloh/Wesel (DE); Kunst, Günther, D-8918 Diessen/Ammersee (DE)
(74) Vertreter: Rieger, Harald, Dr.

(56) Entgegenhaltungen:
- EP-A- 0 114 647
- METALLURGICAL TRANSACTIONS B, Band 7B, September 1976, Seiten 333-338; T.N.ANDERSEN et al.: "A rapid electrochemical method for measuring the concentration of active glue in copper refinery electrolyte which contains Thiourea"

## Beschreibung

Die Erfindung betrifft ein Verfahren zur Messung der Wirksamkeit eines als Inhibitor wirkenden organischen Zusatzstoffs in einem wäßrigen Elektrolyten während der elektrolytischen Abscheidung eines Metalls, wobei der Elektrolyt den organischen Zusatzstoff zum Verbessern der Metallabscheidung enthält.

Es ist bekannt, bei der elektrolytischen Metallgewinnung und -raffination, sowie bei der Herstellung galvanischer Überzüge den Elektrolyten sogenannte Inhibitoren zuzusetzen. Diese Inhibitoren bewirken eine Vergleichmäßigung der Metallabscheidung, so daß die Qualität des abgeschiedenen Metalls durch Vermeidung von ungleichmäßigen und rauhen Oberflächen, die zu Einschlüssen führen, wesentlich verbessert wird. Die Konzentration der Inhibitoren liegt üblicherweise unter 10 mg/l. Inhibierende Zusätze in Elektrolyten der Kupferelektrolyse sind beispielsweise Thioharnstoff und hochmolekulare Stoffe wie tierischer Leim, Ligninsulfonat oder Aloe-Extrakt. Vor allem in der Galvanotechnik werden auch synthetische Inhibitoren und Glanzbildner eingesetzt. In Elektrolyten für die Kupferraffinationselektrolyse werden vielfach Thioharnstoff und tierischer Leim als Inhibitor in Konzentrationen unter 10 mg/l eingesetzt. Ein wesentliches technisches Problem besteht nun darin, daß die wirksame Konzentration der Zusätze während des Prozesses abnimmt, sei es durch Verbrauch, Zersetzung, Einbau in das abgeschiedene Metall oder durch Abbau der vielfach hochmolekularen Stoffe zu wenig wirksamen niedermolekularen Stoffen. Es ist daher von großer technischer Bedeutung, die noch vorhandenen wirksamen Zusätze zu ermitteln und gegebenenfalls durch entsprechende Nachdosierung aufzustärken, bevor die Qualität der Metallabscheidung nachteilig beeinflußt wird.

Auch für die Auslegung einer technischen Anlage spielt die Kenntnis der Geschwindigkeit, mit der ein die Metallabscheidung verbessernder Zusatz zerfällt, eine wesentliche Rolle, da bei Durchfluß-Aggregaten am Ende des Aggregats der am Anfang zugesetzte Inhibitor schon zerfallen sein kann und somit die Größe des Durchflußaggregats der Zerfallsgeschwindigkeit angepaßt werden muß.

Es hat daher im Stand der Technik nicht an Bemühungen gefehlt, sowohl bei der Metallgewinnung und Metallraffination als auch in der Galvanostegie die Konzentration der Zusätze objektiv zu bestimmen, um die häufig vorgenommene rein visuelle Beurteilung von Metallüberzügen zu erübrigen. Beispielsweise ist aus US-A-4 474 649 eine polarographische Meßmethode für Thioharnstoff im Kupferelektrolyten bei Konzentrationen von bis zu weniger als 1 mg/l bekannt. Während diese Methode direkt die analytische Konzentration des Zusatzes bestimmt, wird bei der Ermittlung der Konzentration hochmolekularer Stoffe vor allem versucht, die Wirkung dieser Stoffe zu messen. Hierbei spielen Potential-Messungen eine große Rolle.

In "Metallurgical Transactions B", Band 7B, September 1976, Seiten 333 bis 338, werden elektrochemische Verfahren zur Messung der Leimkonzentration im Elektrolyten der Kupferraffination beschrieben. Hierbei wird in einem Fall der durch eine Meßzelle geleitete elektrische Strom schrittweise vergrößert und eine weitere Möglichkeit besteht darin, mit einer Meßzelle mit flächigen Elektroden und einer Referenzelektrode zu arbeiten.

Der Erfindung liegt die Aufgabe zugrunde, ein ebenso einfach wie zuverlässig anzuwendendes Verfahren zur Messung der wirksamen Konzentration von Inhibitoren in Elektrolyten für die elektrolytische Metallabscheidung bereitzustellen. Ferner soll eine hohe und gleichmäßige Qualität der Metallabscheidung sichergestellt werden. Erfindungsgemäß wird die Aufgabe beim eingangs genannten Verfahren durch die im Kennzeichen des Patentanspruchs 1 genannten Merkmale gelöst.

Nach dem Verfahren der Erfindung können Konzentrationen eines Inhibitors im Elektrolyten, wie tierischer und synthetischer Leim, bis zu unteren Werten von 20 ppb gemessen werden.

Zur praktischen Durchführung des Verfahrens der Erfindung wird eine Meßzelle mit einem Einlauf und Auslauf verwendet, in die ein Teilstrom des Elektrolyten mit einer Strömungsgeschwindigkeit von 0,01 bis 10 cm/s eingeleitet wird.

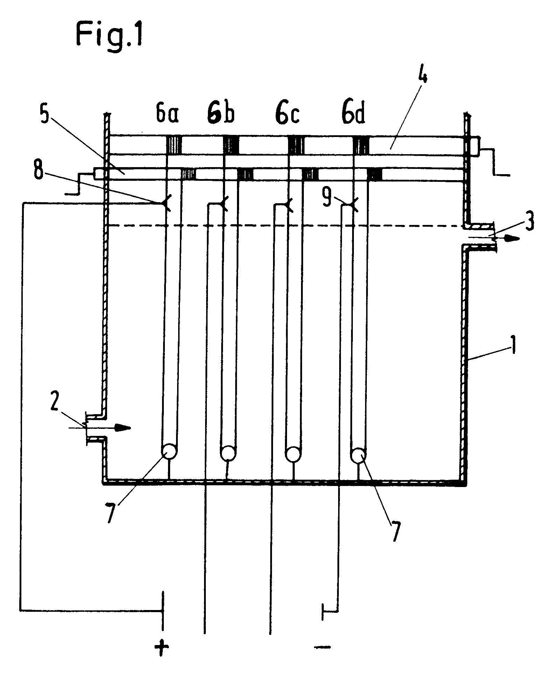

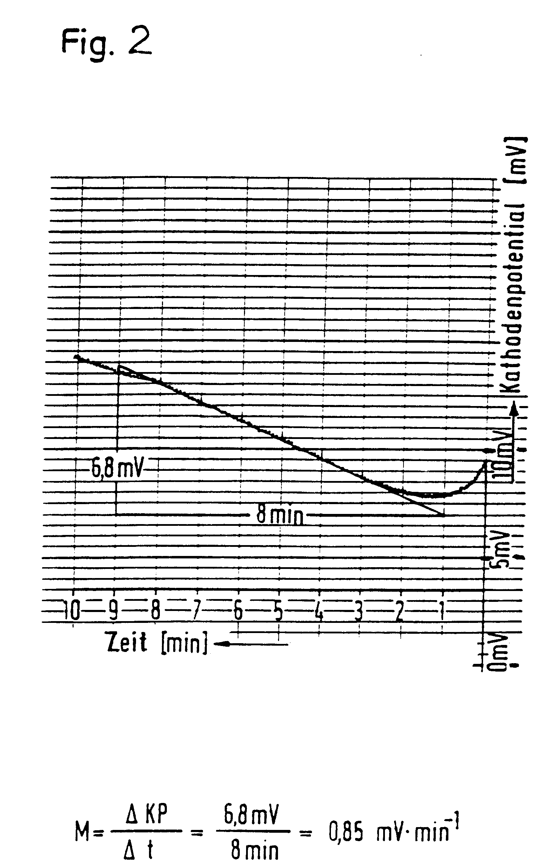

In Fig. 1 ist eine Meßzelle schematisch dargestellt, Fig. 2 dient der Erläuterung des Meßverfahrens.

In einen Behälter (1) von etwa 2 l Inhalt, vgl. Fig. 1, strömt bei (2) der zu messende Elektrolyt ein und verläßt bei (3) die Zelle. Eine nicht dargestellte Pumpe sorgt für den gleichmäßigen Fluß des Elektrolyten durch den Behälter. Mit (4) und (5) sind Wickelvorrichtungen bezeichnet, von denen die Drähte (6a) bis (6d) ab- bzw. aufgewickelt werden, wobei sie im Elektrolyten über am Gefäßboden befestigte Umlenkeinrichtungen (7) geführt und gespannt werden. Über die Kontaktgeber (8, 9) sind die Drähte an eine Gleichstromquelle angeschlossen. Von den vier drahtförmigen Elektroden, die in gleichem Abstand angeordnet sind, dienen die beiden äußeren Drähte als Anode bzw. Kathode und die beiden inneren Drähte als Sonden oder Meßelektroden. Über die Wickelvorrichtung (4, 5) wird nach jeder Meßreihe der benutzte Drahtabschnitt aus dem Elektrolyten durch Aufwickeln entfernt und ein Drahtabschnitt mit frischer Leiteroberfläche bereitgestellt. Für die drahtförmigen Elektroden kann man z.B. Kupferdraht verwenden (Durchmesser z.B. etwa 0,5 mm).

Für die Reproduzierbarkeit der Messung ist es wesentlich, daß die Kathodenpotential/Zeit-Kurve bei konstantem Stromdurchgang bei jeder Meßreihe und beginnend mit Metallelektroden mit frischer Leiteroberfläche aufgenommen wird. Im Sinne der Erfindung wird unter frischer Leiteroberfläche verstanden, daß der Metalldraht, z.B. Kupferdraht, nicht oxidiert ist und sich auf ihm keine durch vorangegangene Messungen elektrolytisch abgeschiedene Metallschicht befindet. Die Bereitstellung eines Drahtabschnitts mit frischer Leiteroberfläche kann in der Ausführungsform der Erfindung gemäß Fig. 1 dadurch erreicht werden, daß der in den Elektrolyten eintauchende Drahtabschnitt nach jeder Meßreihe über eine geeignete Wickelvorrichtung weitertransportiert und aufgewickelt wird. Eine solche Meßzelle eignet sich z.B. zur Messung der wirksamen Inhibitorkonzentration im Elektrolyten der Kupferelektrolyse.

Gemäß einer weiteren Ausführungsform der Meßzelle verwendet man im Elektrolyten unlöslichen Platindraht als Anoden- und Kathodenmaterial. Hierbei wird nach jeder Meßreihe die auf dem Platindraht abgeschiedene Metallschicht dadurch wieder abgelöst, daß die Kathode als Anode und als Kathode eine Meßelektrode geschaltet wird. Für die Meßelektroden verwendet man Kupfer- oder Platindraht.

Die Vorteile des Verfahrens der Erfindung sind darin zu sehen, daß in einfacher und sicherer Weise die Wirksamkeit von Inhibitoren im Elektrolyten während der Metallabscheidung kontrolliert werden kann und durch Nachdosieren eine Metallabscheidung erzielt wird, die sich bei der Kupferelektrolyse durch geringe Anzahl von Knospen und praktisch keine Verunreinigungen und bei der Galvanotechnik durch hohen Oberflächenglanz auszeichnet.

Die Erfindung wird anhand der nachstehenden Beispiele näher erläutert.

### Beispiel 1

Durch das Meßgefäß gemäß Fig. 1 mit einem Volumen von 2 l wird der Elektrolyt einer Kupferraffinationselektrolyse bei 60°C und einer Pumpgeschwindigkeit von 2,0 l/min geleitet. Der Elektrolyt hat folgende Zusammensetzung:
42 g/l Cu
150 g/l H₂SO₄
7 g/l Ni
8 g/l As
0,4 g/l Sb
Nach ca. 5 min wird über die Wickelvorrichtung ein frischer Drahtabschnitt zur Verfügung gestellt. Anschließend wird zwischen Anode und Kathode mittels einer Konstantstromquelle ein Strom von 50 mA aufrechterhalten und die Kathodenpotential/Zeit-Kurve zwischen 0 und 10 min nach dem Einschalten in einer aus vielen Einzelmessungen bestehenden Meßreihe aufgenommen. Aus dem in Fig. 2 dargestellten Verlauf der Kurve wird entweder manuell oder mit Hilfe eines Computerprogramms die Steigung M der Potential/Zeit-Kurve bestimmt. Die nachstehende Tabelle 1 zeigt verschiedene Werte der Steigung M für unterschiedliche Elektrolytlösungen.

Ein Elektrolyt der Kupferelektrolyse, in welchem durch Kochen die Wirksamkeit der noch vorhandenen Leimreste (Glutin-Leim) weitgehend zerstört ist, zeigt die Steigung M ≦ 0 mV/min (Meßreihe 1), dagegen erhält man nach Zusatz von 0,2 mg/l frisch angesetzten Glutin-Leims eine Steigung von M = 0,82 mV/min (Meßreihe 2) und bei Zusatz von 0,6 mg/l Glutin-Leim eine Steigung von H ≦ 3,03 mV/min. In Messung 5 und 6 sind die Meßwerte für den Einlauf und den Auslauf in einem Bad der Kupferelektrolyse dargestellt. Der Elektrolyt hatte die Zusammensetzung 42 g/l Cu, 7 g/l Ni, 8 g/l As, 0,4 g/l Sb, 150 g/l H₂SO₄. Der Leimzerfall während des Durchflusses ist deutlich an den Werten erkennbar.

**Tabelle 1**

| Wirksame Leimkonzentration im Elektrolyten einer Kupferraffinationselektrolyse | | |
|---|---|---|
| Meßreihe Nr. | Leimkonzentr. (mg/l) | Steigung M (mV/min) |
| 1 | 0 | < 0 |
| 2 | 0,2 | 0,82 |
| 3 | 0,4 | 1,52 |
| 4 | 0,6 | 3,03 |
| 5 | Einlauf | 1,71 |
| 6 | Auslauf | 0,44 |
| Relative Strömungsgeschwindigkeit des Elektrolyten: 0,34 cm/s, Meßstrom: 50 mA. | | |

### Beispiel 2

Durch das Meßgefäß gemäß Fig. 1 wird der Elektrolyt der Zusammensetzung 50 g/l Cu, 75 g/l H₂SO₄, 30 mg/l Cl (Temperatur 20°C, Strom 25 mA, Pumpgeschwindigkeit 2,91 l/min) für eine galvanische Abscheidung von Kupfer auf ein Polystyrolsubstrat geleitet und die Abscheidung vermessen.

Die Meßwerte wurden visuell mit dem Glanz des abgeschiedenen Metalls korreliert. Tabelle 2 zeigt, daß bei Steigungen mit M < 1,7 mV/min keine glänzenden Kupferüberzüge erhalten werden, bei Werten für die Steigung mit M > 5,0 mV/min die Kupferüberzüge jedoch glänzend sind.

**Tabelle 2**

| Meßergebnisse zur Wirkung eines galvanischen Glanzmittels (Novostar R1 der Fa. Blasberg, Solingen) | |
|---|---|
| Steigung M (mV/min) | Kupferabscheidung - visuelle Beurteilung - |
| 5,0 - 11,6 | glänzende Kupferabscheidung |
| 1,7 - 5,0 | teilweise glänzende Abscheidung |
| < 1,7 | matte Abscheidung |
| Relative Geschwindigkeit des Elektrolyten: 0,34 cm/s, Meßstrom: 25 mA. | |

### Beispiel 3

Durch eine Meßzelle mit Platindraht als Kathode und Anode wird der Elektrolyt einer Kupferraffinationselektrolyse bei 60°C und einer Pumpgeschwindigkeit von 2,91 l/min geleitet. Der Elektrolyt hat die Zusammensetzung:
42 g/l Cu
7 g/l Ni
8 g/l As
0,4 g/l Sb
150 g/l H₂SO₄
Entsprechend Beispiel 1 wurde ein Strom von 50 mA aufrechterhalten und die Kathodenpotential/Zeit-Kurve zwischen 0 und 10 min nach Stromeinschaltung aufgenommen.

Die Kathode wurde nach jeder Meßreihe durch Stromumkehr (t = 0,5 min, I = 2 A) gereinigt. Tabelle 3 zeigt, daß die Messungen nur dann gut reproduzierbar sind, wenn die beschriebene Reinigung der Kathode durch anodische Rücklösung durchgeführt wird.

**Tabelle 3**

| Reproduzierbarkeit der Meßergebnisse mit und ohne Reinigung des Drahtes | | |
|---|---|---|
| Meßreihe Nr. | Draht gereinigt (ja/nein) | Steigung M (mV/min) |
| 1 | ja | 1,33 |
| 2 | nein | 0,23 |
| 3 | nein | 0,56 |
| 4 | nein | 0,43 |
| 5 | ja | 1,27 |
| Relative Geschwindigkeit des Elektrolyten: 0,34 cm/s, Meßstrom: 50 mA. | | |

### Beispiel 4

Es wurde mit einem Elektrolyten der im Beispiel 1 angegebenen Zusammensetzung in einer Meßzelle gemäß Fig. 1 gearbeitet.

Jedoch wurden die Messungen über mehrere Monate bei unterschiedlicher Leimdosierung in einem Kupferelektrolyten durchgeführt und die Zahl der Kurzschlüsse mit den gefundenen Meßwerten korreliert. Tabelle 4 zeigt deutlich, daß bei den in diesem Beispiel angegebenen Meßbedingungen bei Meßwerten von M < 1,0 mV/min am Einlauf, bzw. von M < 0,3 mV/min am Auslauf mit verschlechterter Stromausbeute in einer Kupferelektrolyse gerechnet werden muß, da die wirksame Leimmenge zu gering ist.

**Tabelle 4**

| Wirksame Leimkonzentration im Elektrolyten der Kupferelektrolyse | | | |
|---|---|---|---|
| Leimmenge % | mittlerer Meßwert der Steigung M | | Kurzschlüsse pro Anodenreise |
| | Einlauf (mV/min) | Auslauf (mV/min) | |
| 100 | 1,65 | 0,44 | 42 |
| 65 | 1,21 | 0,45 | 41 |
| 100 | 1,61 | 0,64 | 55 |
| 100 | 1,65 | 0,67 | 42 |
| 47 | 0,71 | 0,27 | 93 |
| Relative Geschwindigkeit des Elektrolyten: 0,34 cm/s, Meßstrom: 50 mA. | | | |

## Patentansprüche

1. Verfahren zur Messung der Wirksamkeit eines als Inhibitor wirkenden organischen Zusatzstoffs in einem wäßrigen Elektrolyten während der elektrolytischen Abscheidung eines Metalls, wobei der Elektrolyt den organischen Zusatzstoff zum Verbessern der Metallabscheidung enthält, dadurch gekennzeichnet, daß man einen Teilstrom des Elektrolyten mit konstanter Strömungsgeschwindigkeit durch eine Meßzelle mit vier äquidistant in Reihe angeordneten drahtförmigen Elektroden, nämlich einer Anode, einer Kathode und zwei zwischen ihnen liegenden Meßelektroden leitet, daß man von außen an die Kathode und die Anode eine elektrische Gleichspannung anlegt und während einer Meßreihe über eine Zeitspanne von 0,1 bis 50 Minuten einen konstanten Strom zwischen Anode und Kathode von 5 bis 1000 mA durch den Elektrolyten leitet, daß man die Meßreihe mit Elektroden mit frischer Leiteroberfläche beginnt, daß man den zeitlichen Verlauf der zwischen der Kathode und der benachbarten Meßelektrode liegenden elektrischen, Kathodenpotential genannten Spannung aufzeichnet und die Steigung der Kathodenpotential/Zeit-Kurve als Maß für die wirksame Konzentration des Inhibitors verwendet.

2. Verfahren nach Anspruch 1, dadurch gekennzeichnet, daß eine konstante Strömungsgeschwindigkeit von 0,01 bis 10 cm/s im Meßbehälter aufrechterhalten wird.

3. Verfahren nach Anspruch 1 oder 2, dadurch gekennzeichnet, daß die drahtförmigen Elektroden im Meßbehälter in eine Wickelvorrichtung eingespannt sind und nach jeder Meßreihe der in den Elektrolyten eingetauchte Drahtabschnitt entfernt wird.

## Claims

1. A process for measuring the effectiveness of an organic additive acting as inhibitor in an aqueous electrolyte during the electrolytic deposition of a metal, in which the electrolyte contains the organic additive to improve the metal deposition, characterised in that a partial current of the electrolyte is directed with a constant speed of flow through a measurement cell with four filamentary electrodes arranged equidistantly in series, namely an anode, a cathode and two measurement electrodes lying between them, that an electrical direct current is applied from the exterior to the cathode and the anode and during a measurement series over a time span of 0.1 to 50 minutes a constant current is directed between the anode and cathode of 5 to 1000 mA through the electrolyte, that the measurement series is begun with electrodes with a fresh conductor surface, that the time slope of the electrical voltage, named cathode potential, lying between the cathode and the adjacent measurement electrode is recorded and the gradient of the cathode potential/time curve is used as a measurement for the effective concentration of the inhibitor.

2. A process according to Claim 1, characterised in that a constant speed of flow of 0.01 to 10 cm/s is maintained in the measurement vessel.

3. A process according to Claim 1 or 2, characterised in that the filamentary electrodes in the measurement vessel are clamped into a winding device and after each measurement series, the wire section which is immersed into the electrolyte is removed.

## Revendications

1. Procédé de mesure de l'efficacité d'un additif organique servant d'inhibiteur dans un électrolyte aqueux pendant le dépôt électrolytique d'un métal, l'électrolyte contenant l'additif organique pour améliorer le dépôt de métal, caractérisé en ce qu'il consiste à envoyer un courant partiel de l'électrolyte à vitesse d'écoulement constante dans une cellule de mesure ayant quatre électrodes filiformes équidistantes disposées suivant une rangée, à savoir une anode, une cathode et deux électrodes de mesure interposées entre elles, à appliquer de l'extérieur à la cathode et à l'anode une tension électrique continue, et à envoyer dans l'électrolyte pendant une série de mesures, pendant un laps de temps de 0,1 à 50 minutes, un courant constant entre l'anode et la cathode de 5 à 1000 mA, à commencer la série de mesures avec des électrodes ayant une surface conductrice fraîche, à enregistrer la courbe, en fonction du temps, du potentiel cathodique électrique dit tension entre la cathode et l'électrode de mesure voisine, et à utiliser la pente de la courbe potentiel cathodique/temps comme mesure de la concentration efficace de l'inhibiteur.

2. Procédé suivant la revendication 1, caractérisé en ce qu'il consiste à maintenir une vitesse d'écoulement constante de 0,01 à 10 cm/s dans la cuve de mesure.

3. Procédé suivant la revendication 1 ou 2, caractérisé en ce qu'il consiste à tendre les électrodes filiformes de la cuve de mesure par un dispositif d'enroulement et à enlever après chaque série de mesures le tronçon de fil qui a plongé dans les électrolytes.
